# EUROPEAN PATENT SPECIFICATION

(11) **EP 3 765 217 B1**
(45) Date of publication and mention of the grant of the patent: **24.04.2024**
(21) Application number: 19785596.8
(22) Date of filing: 12.04.2019
(51) Int. Cl.: B21D 28/06, B23K 26/08, B23K 26/361, B23K 26/40, B23P 15/00, B21D 28/22, H02K 15/02, B23K 103/04

(54) **LASER ASSISTED MACHINING OF ELECTRIC MOTOR CORES**
LASERUNTERSTÜTZTE BEARBEITUNG VON ELEKTRISCHEN MOTORKERNEN
USINAGE ASSISTÉ PAR LASER DE NOYAUX DE MOTEUR ÉLECTRIQUE

(30) Priority: 13.04.2018 US 201862657371 P
(43) Date of publication of application: 20.01.2021
(73) Proprietor: IPG Photonics Corporation, Oxford, Massachusetts 01540 (US)
(72) Inventor: LEV, Leonid C., West Bloomfield, MI 48323 (US); MUELLER, Steffen, Plymouth, Michigan 48170 (US)
(74) Representative: Kobiako von Gamm, Iouri
(86) International application number: PCT/US2019/027380
(87) International publication number: WO 2019/200355

(56) References cited:
- DE-A1-102012 103 828
- US-A- 4 285 754
- US-A- 4 285 754

## Description

### RELATED APPLICATIONS

### FIELD OF THE DISCLOSURE

This application is directed generally to methods and systems for fabricating components from flat stock, and more specifically laser machining of sheet stock in fabrication of electric motor stator cores.

### BACKGROUND OF THE DISCLOSURE

Flat parts are often manufactured from steel sheets, steel reels, steel rolls or steel coils with the steel of different chemical composition. In particular, electric motor stator laminations are typically manufactured from silicon steel using punching and stacking processes. Hard tools such as punches and dies are often used in the manufacture, for example in stamping operations. Silicon steel is hard and abrasive, and wears the stamping tools at a high rate. As a result, the tools have to be periodically re-sharpened and re-ground, which adversely affects production cycles and timelines. Also, the cutting action of the punch and die leads to plastic deformation around the cut edge of the laminations, particularly as the tooling loses its edge to wear. This deformation damages the steel material structure, adversely affecting the magnetic properties of the laminations and, ultimately, the performance of the resulting motor stator core.

A method that addresses these issues in the production ot motor laminations and cores would be welcomed.

US Patent No. US 4,285,754 discloses an arrangement and a method for fabricating planar elements which can be stacked for producing predetermined surfaces and bodies. A strip of sheet metal is unwound from a storage reel and advanced to a processing station which punches into the material. The strip material is then further advanced to a processing station in which the planar element is cut from the strip material by a laser beam. Tabs are left within the cut path surrounding the planar element, which serve to hold the planar element in place for further processing.

### SUMMARY OF THE DISCLOSURE

A method according to the current invention, which addresses the above-mentioned issues, is disclosed in claim 1. Various embodiments of the disclosure describe the process of making components or parts from sheet or coil material by combining cutting, scoring and separation processes with a flattening process. The parts include essentially flat components, such as electric motor stator laminations. The cutting process includes cutting a partial outline of the perimeter of the component using high power energy source, such as a laser beam. The cutting process may include cutting of between 20% to 97% of the perimeter of the component. The scoring process includes scoring at least a partial outline of the component perimeter. The component perimeter is scored using high power energy source, such as a laser beam. The scoring process may include scoring of 20% to 100% of the perimeter of the component. The process of separation includes separating the component from sheet or coil, such as by a punching operation, and removing the component from the punch tooling with compressed air or with an electromagnetic pulse.

In addition, a system and process where the cut or scored portion of the sheet material that includes the scored lines or cut edges or both is subjected to a flattening operation is disclosed. The flattening process may be performed prior to the separation process. Performing the flattening process prior to the punching process has the effect of streamlining the process, in that the sheet or coil of the material is easily handled and conveyed from the cutting and scoring processes, through the flattening process, and to the separation process without need for separate handling of the laminations. Also disclosed is an additional streamlining aspect of integrating the stacking of the laminations with the separation process to form the motor stator core. Such streamlining is of particular value when handling thin sheet or coil stock, ubiquitous in motor core manufacturing that, in some cases, resemble a foil material. Herein, "sheet material" is construed broadly to include conventional sheets, ribbons, thin plates, reels, coils and other such forms that may be processed in a stamping or through-punch operation.

The flattening process acts to return the cut and/or scored portion of the sheet material to substantially the original thickness by flattening proud features that may arise in the cutting or scoring processes, such as dross or beads of molten materials which may form at the corners of the scored grooves. The cut and/or scored portion of the sheet may undergo some degree of bowing or warping due to the temperature gradients that are incurred during the cutting and scoring processes. The flattening process may remove or diminish such bowing or warping and restore the scored portion of the sheet material to a planar state.

Another aspect of the disclosed systems and processes is that the score line establishes the location of a line of separation between the lamination and the sheet material during the separation process. If the separation process is conducted with rigid punch and die, tight tolerances between the punch and the die are not required to effect the desired shape of the lamination. This relaxes the tolerance requirements of the tooling, so that instead of 5% to 15% of the sheet material thickness, the die gaps may be one or two times the thickness of the sheet material or greater. Accordingly, the cost of tooling is reduced, and the tooling can experience greater levels of wear before requiring replacement or refurbishment. Furthermore, the rate of tool wear may be greatly reduced, as the forces required to shear the lamination at the score line is reduced relative to shearing the full thickness of the sheet material.

Surprisingly, we have found that, for many applications, the sequence of compressively flattening the cut and/or scored portion of the sheet material before the separation process produces a finished or nearly finished lamination. The roughness of the edges is, for some applications, within a finished specification. Often, the dross or reformed molten material that was turned down at the corners of the cut and/or scored grooves during the flattening process is pre-stressed and fatigued, and is easily removed by light finishing techniques. The laminations, even though produced with more generous punch and die clearances, may also retain a satisfactory planarity through the punching process.

Structurally, various embodiments of the disclosure include a scoring-assisted method for fabricating motor stator laminations from a sheet material, comprising: scoring at least an outline of a component on a sheet material with a high energy radiation source; after the step of scoring, flattening the outline with a flattening device; after the step of flattening the outline, separating the component from the sheet stock, such as by aligning the outline with a component die, the component die being positioned and configured to receive the component punch; and after the step of aligning, driving a component punch through the sheet material and into the component die for disposing the component onto a stacking fixture. In some embodiments, these steps are repeated to dispose a plurality of components onto the stacking fixture, the plurality of components forming a stack. Other steps of the method may include removing the component die from the stacking fixture, or removing the stack from the stacking fixture. In some embodiments, the method includes bonding the components of the stack together, machining an inner surface of the stack, and/or machining an outer surface of the stack. The step of machining may include mounting the stack onto an arbor, and may also include at least one of turning, milling, grinding, honing, and electrical erosion. In various embodiments, the components are electric motor laminations and the stack is an electric motor core. The high energy radiation source in the step of scoring may be a laser. In some embodiments, after the step of scoring and before the step of driving, the method includes removing surface debris from the portion of the sheet material. The step of removing loose material may be performed with compressed air.

In some embodiments, before the step of flattening, the method includes through-cutting a discard out of the sheet material with the high energy radiation source to separate the discard from the sheet material. In other embodiments, before the step of driving the component punch, the method includes driving a discard punch through the sheet material and into a discard die, the discard punch being seated within a discard periphery of the outline. During the step of driving the component punch, a void defined by the component may pass axially over a column of the stacking fixture. For embodiments where the component is an electric motor lamination, the void may be a slot defined between adjacent stator teeth of the electric motor lamination.

In some embodiments of the disclosure, the scoring-assisted method comprises configuring the component punch to be inserted within the component die to define a minimum die gap clearance that is at least one and not more than three times a thickness of the sheet material. The step of scoring may also define a groove having a depth that is in a range of not less than 20% and not more than 95% of a thickness of the sheet material. The operation of cutting may include cutting between 20% to 95% of the part perimeter. In some embodiments, the flattening device is a roller assembly. In some embodiments, the roller assembly includes two rollers that are maintained at a separation that is not less than a nominal thickness of the sheet material and not greater than one micrometer more than the nominal thickness of the sheet material. In some embodiments, a roller pressure is applied during the step of flattening, and may be in a range that is less than the yield strength of the sheet material. In some embodiments the method includes providing the sheet material having a thickness in a range of 20 µm to 400 µm inclusive, and may be of a metallic material, (e.g., a silicone steel including iron, silicon and boron), or an amorphous metal or nanocrystalline metal.

In various embodiments of the disclosure, a system for manufacturing motor laminations from a sheet material includes a conveyor for conveying a sheet material along a conveyance path, a high energy radiation source for forming an outer score line on the sheet material that defines a shape of an outer perimeter of a component, and a flattening device for flattening a scored portion of the sheet material. Some embodiments include a component punch for separating a component from the sheet material at the outer score line and a component die configured to receive the component punch. A stacking fixture may be configured to receive the component punch, the stacking fixture supporting the component die. The flattening device is disposed between the high energy radiation source and the separation process along the conveyance path. The high energy radiation source may be a laser. The flattening device may be a roller assembly including two rollers separated by roller mounts, the roller mounts limiting a separation between said two rollers to a maximum value. In some embodiments, the separation between the rollers is not less than a nominal thickness of the sheet material and not greater than one micrometer more than the nominal thickness of the sheet material. In some embodiments, the roller assembly is a compressive roller, wherein the compressive roller is configured to apply a roller pressure on the sheet material that is less than a yield strength of the sheet material.

In some embodiments, the stacking fixture includes a base and a column that extends upward from the base. The component die may be supported by the base, and the column may extend into the die and parallel to an actuation axis of the component punch. In some embodiments, the column is configured to fit within a void defined by the component. The stacking fixture may be configured to receive a plurality of the components to form a stack. In some embodiments, the components are electric motor stator laminations and the stack is an electric motor stator core.

The high energy radiation source may be configured for through-cutting a discard from within the outer score line to separate the discard from the sheet material. Alternatively, the high energy radiation source is configured for forming a discard score line that is surrounded by the outer score line, the discard score line defining a shape of an outer perimeter of a discard. In some embodiments, the scoring-assisted system includes a discard punch for separating the discard from the sheet material at the discard score line, and a discard die configured to receive the discard punch. The discard punch may be disposed between the flattening device and the component punch along the conveyance path. In various embodiments, the scoring-assisted system is configured to handle a sheet material having a thickness in a range of 20 µm to 400 µm inclusive. The high energy radiation source may be configured to form a groove depth that is in a range of not less than 20% and not more than 95% of a thickness of the sheet material.

### BRIEF DESCRIPTION OF THE DRAWINGS

FIG. 1 is a partial perspective view of a scoring-assisted system according to an embodiment of the disclosure;
FIG. 2 is a partial perspective view of a scoring-assisted system including a discard punch and die, according to an embodiment of the disclosure;
FIG. 3 is an end sectional view of score line grooves before and after flattening, according to an embodiment of the disclosure;
FIG. 4 is a cutaway view of a scored tab bridging a through-cut according to an embodiment of the disclosure;
FIG. 5 is a plan view of a perforated score line according to an embodiment of the disclosure;
FIG. 6 is a side sectional view of the perforated score line of FIG. 5 according to an embodiment of the disclosure;
FIG. 7 is a side sectional view of an alternative perforated score line according to an embodiment of the disclosure;
FIG. 8 is a side sectional view of another alternative perforated score line according to an embodiment of the disclosure;
FIG. 9 is a perspective view of a discard punch and a discard die in alignment with a scored section of a sheet material, according to an embodiment of the disclosure;
FIG. 10 is an elevational, partial cutaway view of the discard punch of FIG. 9 centered over a sheet material and the discard die, according to an embodiment of the disclosure;
FIG. 11 is an enlarged, partial view of the cutaway of FIG. 10 depicting a die clearance gap for the discard punch and the discard die, according to an embodiment of the disclosure;
FIG. 12 is an elevational view of the discard punch of FIG. 10 inserted through the sheet material and into the discard die, according to an embodiment of the disclosure;
FIG. 13 is a sectional view at plane XIII-XIII of FIG. 12 for the discard punch inserted in the discard die according to an embodiment of the disclosure;
FIG. 14 is a perspective view of a component punch centered over a scored section of a sheet material with a discard removed, and a component die and stacking fixture centered under the sheet material, according to an embodiment of the disclosure;
FIG. 15 is an elevational, partial cutaway view of the component punch of FIG. 14 centered over a sheet material and aligned with the component die, according to an embodiment of the disclosure;
FIG. 16 is an enlarged, partial view of the cutaway of FIG. 15 depicting a die clearance gap for the component punch and component die, according to an embodiment of the disclosure;
FIG. 17 is an elevational view of the component punch of FIG. 15 inserted through the sheet material and into the component die, according to an embodiment of the disclosure;
FIG. 18 is a sectional view at plane XVIII-XVIII of FIG. 17 for the discard punch inserted in the discard die according to an embodiment of the disclosure;
FIG. 19 is a perspective, partial cutaway view of the component die of FIG. 14 positioned on the stacking fixture with a component aligned over the stacking fixture, according to an embodiment of the disclosure;
FIG. 20 is an elevational view of the component punch of FIG. 14 inserted through the sheet material and into the component die to deliver a component onto and to compress a stack of components, according to an embodiment of the disclosure;
FIG. 21 is a perspective view of the component die and stacking fixture of FIG. 14 separated to release a stack of components, according to an embodiment of the disclosure;
FIG. 22 is a perspective view of a lamination of a partial layer of an electric motor core according to an embodiment of the disclosure;
FIG. 23 is a perspective view of a segment of an electric motor core fabricated as a stack of laminations of FIG. 22 according to an embodiment of the disclosure;
FIG. 24 is an electric motor core including a plurality of segments of FIG. 23 according to an embodiment of the disclosure;
FIG. 25 is a graph of a cutting depth of a groove versus a scanning rate for a single pass of a 1 kilowatt Ytterbium single-mode continuous wave cutting laser according to an embodiment of the disclosure; and
FIG. 26 is a graph of a cutting depth of a groove versus a number of passes for a 1 kilowatt Ytterbium single-mode continuous wave cutting laser at a scanning rate of 20 meters per second according to an embodiment of the disclosure.

### DETAILED DESCRIPTION OF THE FIGURES

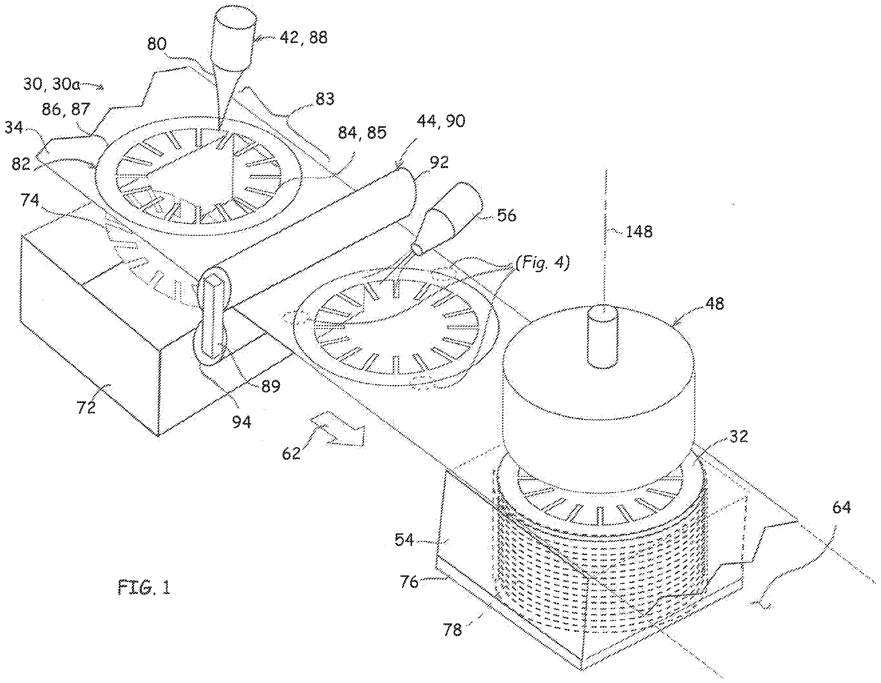

Referring to FIG. 1, a scoring-assisted system 30a for fabricating components 32 from a sheet material 34 is depicted according to an embodiment of the disclosure. In the depicted embodiment, the scoring-assisted system 30a includes a scanning radiation source 42, a sheet flattening device 44, a component punch 48, and a component die 54. Also in the depicted embodiment is an air nozzle 56 directed at the sheet material 34. A discard bin 72 may be configured to receive discards 74 that are removed from the sheet material 34 by scanning radiation source 42. The discards 74 may be a single continuous piece (depicted) or may be a plurality of pieces (e.g., a plurality of isolated apertures). In some embodiments, a stacking fixture 76 is configured to receive a stack 78 of components 32 that are removed from the sheet material 34 by the component punch 48 over several punch cycles. In addition to removing the components 32 from the sheet material 34, the component punch 48 may also act to compress and stabilize the stack 78.

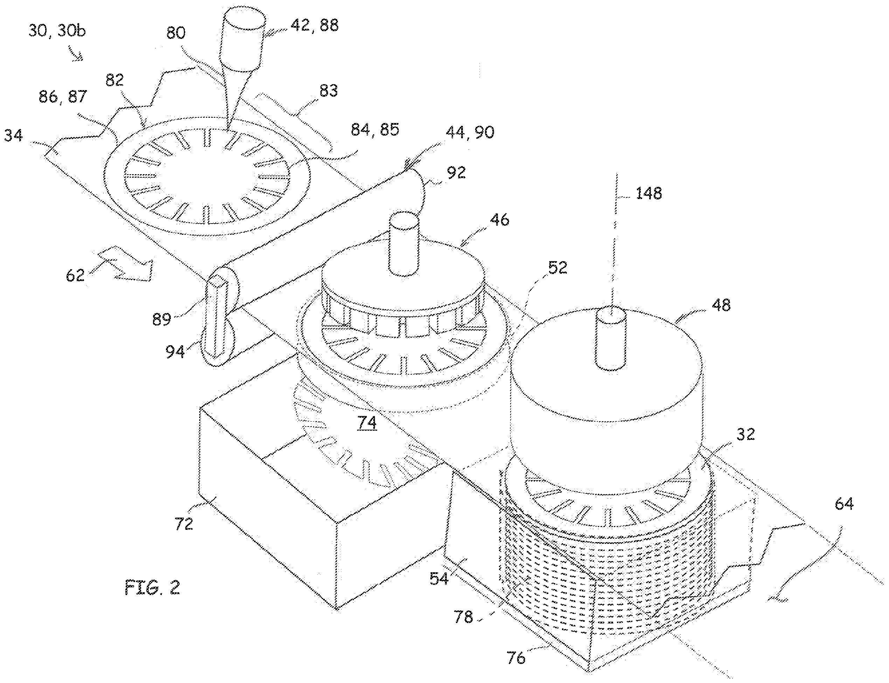

Referring to FIG. 2, a scoring-assisted system 30b for fabricating the components 32 from the sheet material 34 is depicted according to an embodiment of the disclosure. The scoring-assisted system 30b includes many of the same components and attributes as the scoring-assisted system 30a, which are indicated with same-numbered reference characters. In addition, the scoring-assisted system 30b includes a discard punch 46 and a discard die 52. The air nozzle 56 is not depicted in FIG. 2, but it is contemplated that the air nozzle 56 may be utilized in the scoring-assisted system 30b as well. For the scoring-assisted system 30b, the discards 74 are generated by actuation of the discard punch 46, so the discard bin 72 is positioned and configured to receive the discards 74 from the discard die 52.

The scoring-assisted systems 30a and 30b are herein referred to generically or collectively as scoring-assisted system(s) 30. The scoring-assisted systems 30 are configured to convey the sheet material 34 in a direction 62 along a conveyance path 64 so that a given portion of the sheet material 34 is conveyed under the scanning radiation source 42, through the sheet flattening device 44, and between the component punch 48 and component die 54 in sequence.

The scanning radiation source 42 delivers a concentrated beam of radiation 80 and may be configured to rapidly trace an outline 82 of the component 32 on the sheet material 34. Examples of rapid moving radiation sources are found, for example, at U.S. Patent No. 9,649,727 to Kancharla and owned by the owner of the present application. The scanning radiation source 42 may be a laser 88. The laser 88 may be either continuous wave (CW) or pulsed. A non-limiting example of a suitable laser includes a Ytterbium single-mode CW laser, such as the YLR-1000-WC-Y14 manufactured by IPG Photonics. Other single mode lasers of sufficient power, pulses or continuous wave, may be utilized. A beta radiation source (i.e., electron beam) is also contemplated for use as the scanning radiation source 42. In some embodiments, the radiation source 42 is configured to deliver power within a range of 0.5 kW (kilowatts) to 2 kW inclusive. Herein, a range that is said to be "inclusive" includes the end point values of the range as well as all intermediate values within the range.

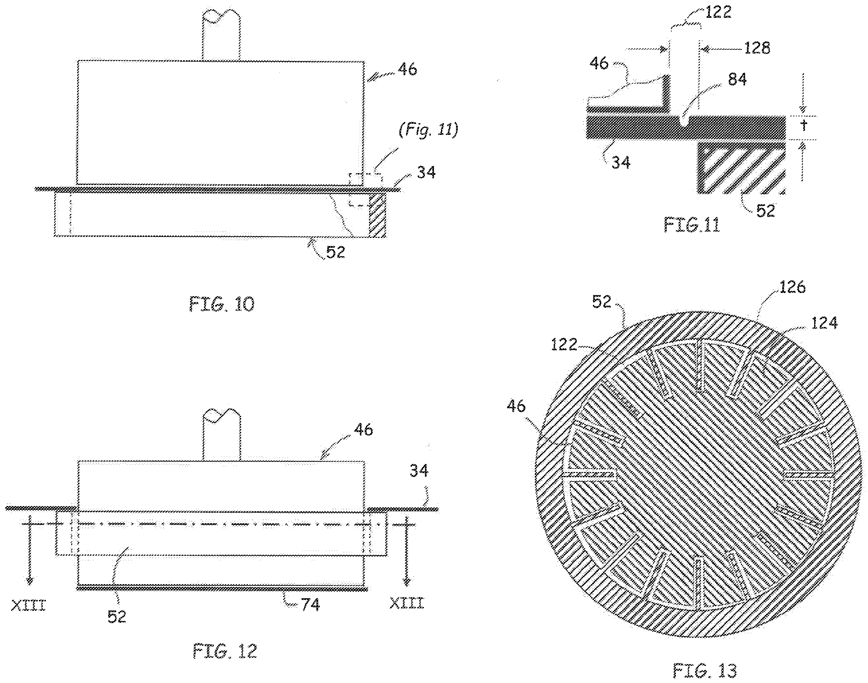

The portion of the sheet material 34 on which the outline 82 is scored is referred to herein as the scored portion 83 of the sheet material 34. In the depicted embodiment, the outline 82 includes an inner or discard score line 84 and an outer score line 86. The inner score line 84 traces an outer perimeter 85 of the discard 74. The outer score line 86 traces an outer perimeter 87 of the component 32. The inner and outer score lines 84 and 86 combine to define the boundaries of the component 32. The scanning radiation source 42 may be configured to score the outline 82 to a desired depth within a thickness t of the sheet material 34 (e.g., FIG. 11) over multiple passes. Non-limiting examples of the desired depth of the score lines 84 and 86 is in a range of 20% to 80% inclusive of the thickness t of the sheet material 34. In some embodiments, the thickness t is in a range of 50 µm to 400 µm inclusive.

The air nozzle 56 may be stationed to between the sheet flattening device 44 and the component punch 48 (depicted). Alternatively, the air jet may be stationed between the scanning radiation source 42 and the sheet flattening device 44. In some embodiments, an additional air jet is incorporated so that an air jet is stationed on both sides of the sheet flattening device 44. The air nozzle 56 may be configured to deliver the jet in a manner that sweeps laterally across the sheet material 34 (depicted). In some embodiments, the air nozzle 56 is configured to trace over the score lines 84 and 86 at close proximity to the sheet material 34. In some embodiments, the score lines 84, 86 may be cleaned of surface debris by devices and techniques other than air nozzles 56, such as brushes, air knife, or water rinse. The cleaning of surface debris may occur before the flattening process, after the flattening process, or both.

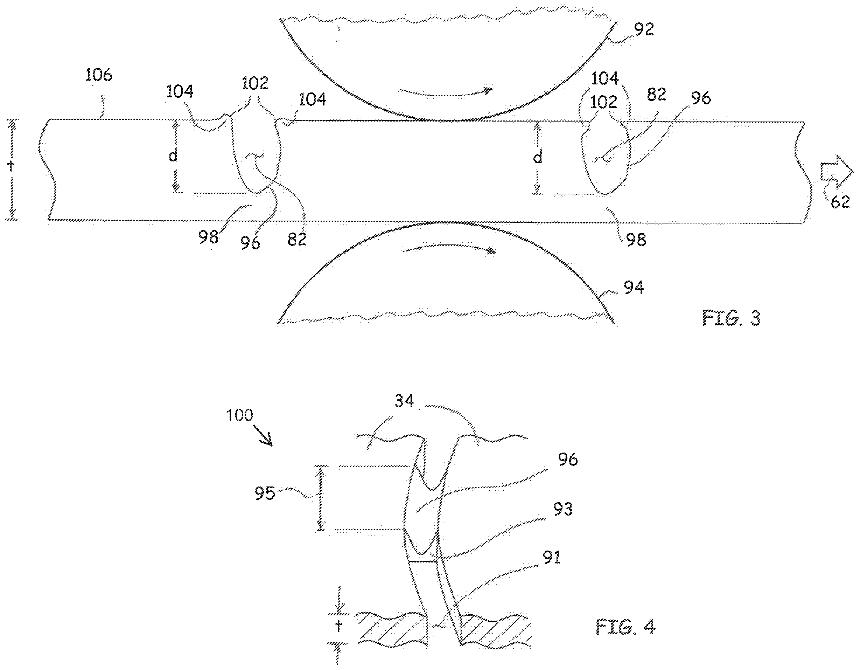

Referring to FIG. 3, the effect performing multiple passes with the scanning radiation source 42 to form the score lines 84 and 86 is depicted according to an embodiment of the disclosure. The score lines 84 and 86 define a groove 96 having a depth d within the thickness t of the sheet material 34, with a web portion 98 that bridges the sides of the groove 96. The scoring of the sheet material 34 with the concentrated beam of radiation 80 causes some reformed molten and dross material 102 to collect at corners 104 of the groove 96 and to extend proud of a surface 106 of the sheet material 34. In the depicted embodiment, some of the sheet material 34 is removed from the groove 96 by vaporization, so that the volume and mass of the reformed material 102 is only a fraction of the total of the sheet material 34 that is removed from the groove 96.

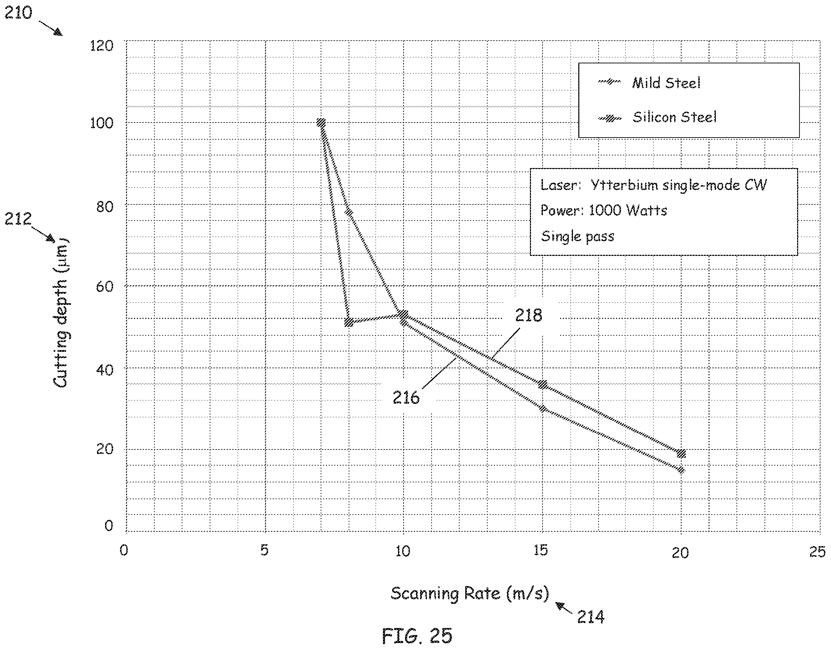

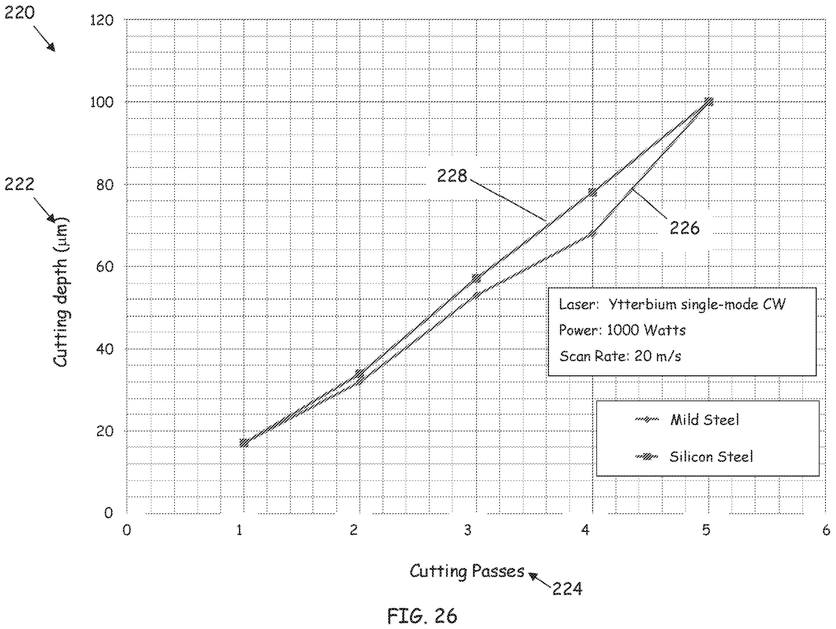

In some embodiments, the scanning radiation source 42 is configured to scan the outline 82 at a rate that is in a range from 5 m/s (meters per second) to 30 m/s inclusive. In some embodiments, the scanning radiation source 42 delivers radiation in a range of 0.1 kW to 2 kW inclusive. The depicted cross section of the groove 96 of FIG. 2 is a non-limiting rendering of a photograph taken of a cross-section of a sheet material 34 of mild steel of 97 µm nominal thickness that was scanned with a 1 kW laser a total of four times at a scanning rate of 20 m/s. Results for the same scoring parameters on a sheet of silicon steel were similar. For both mild steel and silicon steel, under the stated scoring conditions, the thickness of material removed from the groove 96 for each pass of the scanning radiation source 42 has been observed to be is in the range of 15 µm to 35 µm inclusive, with a nominal thickness of removed material to be 16 µm to 20 µm inclusive. Data for a cutting depth of mild steel and silicone steel at varying scan rates and numbers of passes are presented below at FIGS. 25 and 26.

Functionally, by forming the score lines 84 and 86 over multiple passes, the heat affected zone of the sheet material 34 is reduced relative to that of a single pass that dwells long enough to form the groove 96. Also, because less of the energy delivered by the concentrated radiation beam 80 is absorbed by the sheet material 34, the amount of material vaporized during the successive passes may be increased relative to a single pass formation of a groove of similar depth. Also, irregularities that may be formed on the sides of the groove 96 (e.g., by reformation of dross) during initial passes may tend to be ablated away in successive passes to form a cleaner, better defined groove 96.

In some embodiments, one contour line may be completely through-cut while another contour line may be scored. Such an arrangement is depicted in scoring-assisted system 30a, where the discard 74 is completely through-cut by the scanning radiation source 42, while the outer score line 86 remains. This arrangement negates the need for the discard punch process, while leaving the component 32 attached to the sheet material 34 for conveyance along the conveyance path 62 through the sheet flattening device 44 and onto the component die 54.

Referring to FIG. 4, a scored tab configuration 100 is depicted according to an embodiment of the disclosure. In this embodiment, scoring is combined with through-cutting so that a portion of the contour line of the component 32 is cut through the thickness t of the sheet material 34 while material remains along another portion of the contour line. For example, one or both of the perimeters 85, 87 may include a through-cut portion 91 and a tab portion 93, the tab portion 93 bridging the through-cut portion 91. In some embodiments, the tab portion 93 is scored with the groove 96 in the manner depicted in FIG. 3. In some embodiments, a plurality of such tab portions 93 are formed along the perimeter(s) 85, 87. In some embodiments, a ratio of a sum of the tangential lengths 95 of the tabs 93 to a total length of the corresponding perimeter 85, 87 is in a range of 50% to 97% inclusive; in some embodiments, the ratio is in a range of 75% to 95%; in some embodiments, the ratio is in a range of 85% to 95%.

Functionally, the tabs 93 maintain coupling between the component 32 and the sheet material 34 or between the coupling 32 and discard 74 and the sheet material 34, enabling the component 32 or the combined component 32 and discard 74 to be stably conveyed along the conveyance path 64 with the sheet material 34, for positioning over the component die 54 or both the discard die 52 and the component die 54 in sequence. The reduced bridging between the discard 74 and component 32 and between the component 32 and sheet material 34 relative to a conventional stamping process reduces the required separation forces. In embodiments where the tab portions 93 are scored, the forces are further reduced and the line of separation may be predictable within a tighter tolerance than with tab portions 93 that are not scored.

In the depicted embodiment, the sheet flattening device 44 is a roller assembly 90 that includes opposed rollers 92, 94 on opposing sides of the sheet material 34. The opposed rollers 92, 94 may be coupled to roller mounts 89 that are configured to limit separation of the rollers 92, 94 at a maximum predetermined distance. In some embodiments, the maximum separation of the rollers 92, 94 is set to be at least the nominal thickness t of the sheet material and no greater than 1 µm more than the nominal thickness t. In some embodiments, the roller mounts 89 are configured to provide rigid separation of the rollers 92, 94. Contact of each roller 92, 94 with the sheet material 34 may be established by an electrical contact measurement. In some embodiments, the rollers 92, 94 are of a hard metallic material. In some embodiments, the rollers 92 and 94 operate at different electrical potentials, thereby causing a current to flow through the sheet material 34 during conveyance through the roller assembly 90.

Functionally, limiting the separation between the rollers 92, 94 to a maximum dimension at the nominal thickness t or rigidly maintaining the separation at the nominal thickness t of the sheet material 34 enables the roller assembly 90 to perform the flattening function without exerting substantial stresses on the core of the sheet material. As the scored portion 83 of the sheet material passes through the roller assembly 90, only the proud features relative to the surface 106, such as the reformed molten and dross material 102 at the corners 104 (FIG. 3), exceed the nominal thickness t of the sheet material 34 and come into compressive contact with the rollers 92, 94. Because the separation between the rollers 92, 94 do not exceed or are held constantly at the nominal thickness t, the reformed molten and dross material 102 will yield locally to the rollers 92, 94, resulting in plastic deformation that turns these features down.

Accordingly, the scored portions 83 of the sheet material are flattened without generating substantial Hertzian contact stresses. Hertzian contact theory characterizes the stresses generated by the contact of curved stresses, and is described, for example, at Xiaoyin Zhu, "Tutorial on Hertz Contact Stress", available at https://wp.optics.arizona.edu/optomech/wp-content/uploads/sites/53/2016/10/OPTI-521-Tutorial-on-Hertz-contact-stress-Xiaoyin-Zhu.pdf, last visited on March 27, 2018.

Excessive Hertzian contact stresses are known, for example, to adversely affect the magnetic properties of materials.

Alternatively, the roller assembly 90 may be a compressive roller configured to compress the sheet material 34 therebetween using a predetermined force as the sheet material 34 is conveyed through the roller assembly 90. Compression between the rollers 92, 94 may be accomplished, for example, with hydraulic actuators (not depicted). The predetermined force generated by the roller assembly 90 may be tailored to deliver stresses on the sheet material 34 that do not exceed the yield strength of the material. Because the reformed molten and dross material 102 stands proud relative to the surface 106 of the sheet material 34 and constitutes a small fraction of the total line contact of the roller assembly 90, the local stresses on the reformed molten and dross material 102 will far exceed the average stress on the sheet material 34, thereby preventing deformation of the core of the sheet material 34 while still providing flattening (plastic deformation) of the reformed molten and dross material 102. In some embodiments, the roller assembly 90 is configured to apply a compressive force on the sheet material 34 only when the sheet material 34 is moving through the roller assembly 90. Alternatively, the flattening device 44 may include a flat stamping plate (not depicted), a rocking press (not depicted), or other devices and techniques for flattening sheet material available to the artisan.

The effect of flattening the sheet material 34 after scoring but prior to punching is also depicted in FIG. 3 according to an embodiment of the disclosure. The sheet material 34 is advanced through the roller assembly 90 so that the reformed material 102 is flattened (i.e., made substantially planar with the surface 106). For some materials, such as mild steel and amorphous silicon steel, the reformed material 102 is relatively ductile, so that the reformed material is turned down at the corners 104. Also, some reformed material that is tenuously attached to the corners 104 may be pre-stressed and fatigued or fractured and detached during the flattening process. Operating the rollers 92, 94 at different potentials may provide local heating of the sheet material 34 to augment the flattening process. The electrical current also interacts with the core of the component 32 to augment plastic deformation desirable in the flattening process.

Accordingly, to "flatten" the sheet material 34 is to compress or return the reformed molten and dross material 102 to be substantially at or within the original thickness t of the sheet material 34, and to mitigate bowing and warping of the sheet material. That is, the sheet material 34 will still define the outline 82 after the flattening process. The flattening process does not compress the sheet material 34 to the point of eliminating the score lines 82 and 84.

In some embodiments, the compressive force is applied by the roller 90 only when the sheet material 34 is advanced therethrough. By applying the compressive force with the roller assembly 90 only when the sheet material 34 is passing through the roller assembly 90, the system avoids dimpling of the sheet material 34 that may otherwise occur as the material dwells momentarily within the rollers 92, 94.

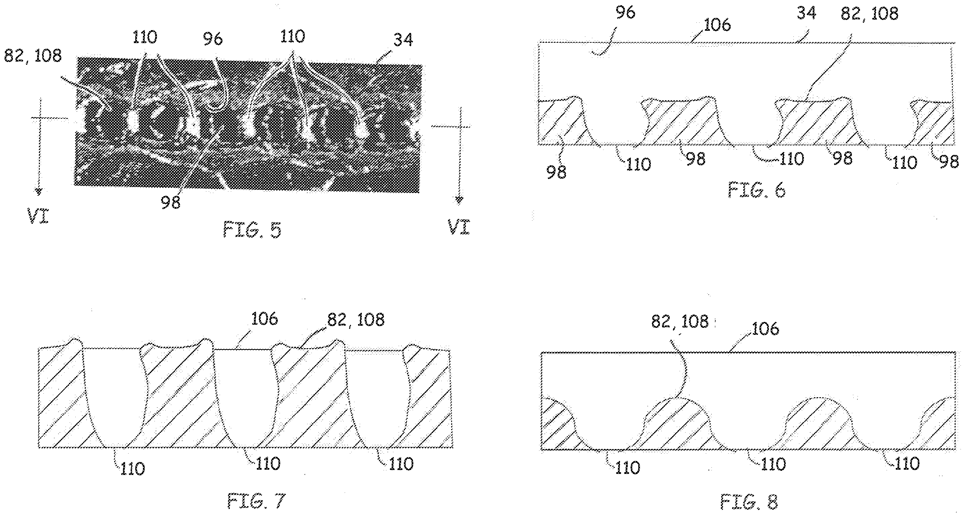

Referring to FIGS. 5 through 8, a perforated score line 108 is depicted in an embodiment of the disclosure. The perforated score line 108 is characterized as having perforations 110 formed along the length of the web portion 98 within the groove 96. In some embodiments, at least a portion of one or both of the discard score line 84 and the outer score line 86 of the score outline 82 is formed with such perforated score lines 108. The perforated score line 108 may be formed over multiple passes as discussed above. In FIGS. 5 and 6, the score outline 82 is initially formed as being continuous and of substantially uniform depth, followed by bursts of radiation energy at discrete points along the length of the groove 96 to form the perforations 110. In some embodiments, only the perforations are formed by the scanning radiation source 42 (FIG. 7). That is, the scoring-assisted systems 30 are configured so that the scanning radiation source 42 delivers bursts of radiation only at the desired locations of the perforations 110 to form a discontinuous scoring outline 82. In some embodiments, the scan rate is undulated so that the concentrated radiation beam 80 dwells or passes more slowly over the regions where the perforations 110 are to be formed (FIG. 8). After formation of the perforated score line 108, the sheet material 34 with score lines 82 and 84 thus formed may be compressively flattened as described above.

Functionally, the perforations 110 serve to reduce the forces required to separate the components 32 or the discards 74 or both from the sheet material 34. Any dross material that may be formed along the boundaries of the perforations 110 may be flattened or removed by the flattening device 44 in the same manner as the corners 104 described above. The perforations 110 may also serve to limit the effect of tearing or ripping along the lines of separation and to keep the lines of separation centered along the web portion 98, so that the nominal peripheries of the components 32 are substantially uniform.

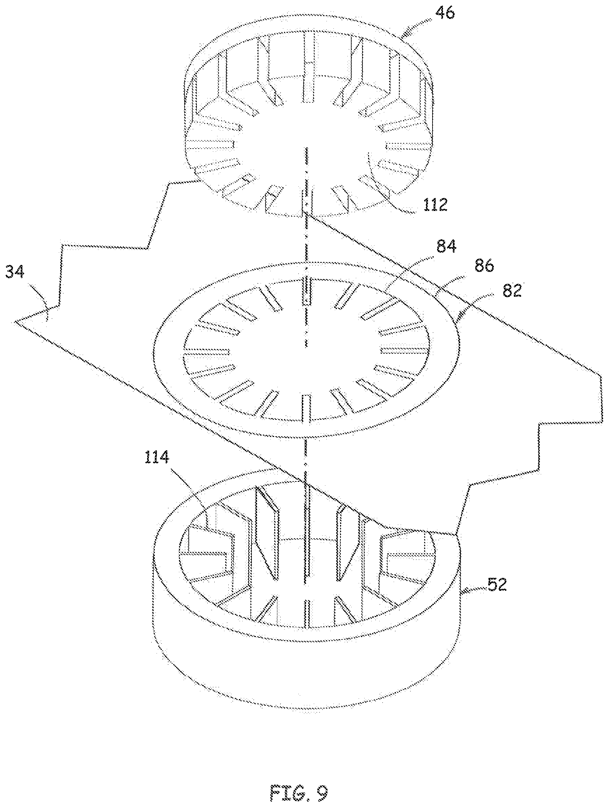

Referring to FIG. 9, the discard punch 46 and discard die 52 are depicted according to an embodiment of the disclosure. The discard punch 46 and discard die 52 are so-named because they function to remove the discards 74 from the sheet material 34 that is not part of the finished component 32. The discard punch 46 may define a footprint 112 that approximates but is within the inner or discard score line 84 of the discards 74. The discard die 52, when utilized, is configured to receive the discard punch 46 and may define a footprint 114 that approximates but is within the discard score line 84 of the outline 82.

In operation, after the component 32 has been scored with the scanning radiation source 42, the inner or discard score line 84 of the outline 82 of the component 32 is aligned over the discard die 52 to define a die clearance gap 122 between the discard punch 46 and the discard die 52 (FIGS. 10 and 11). The scoring-assisted system 30b may be configured so that the outline 82 is in the same rotational orientation as the discard punch 46 and discard die 52, such that the discard score line 84 is positioned over the die clearance gap 122 by translating the outline 82 over the discard die 52. When the component outline 82 is aligned with the discard die 52, the discard score line 84 traces over the die clearance gap 122.

The discard punch 46, which aligns within the discard score line 84, is then thrust through the sheet material 34 to separate the discard 74 from the sheet material 34 (FIG. 12) at the discard score line 84. During the separation of the discard 74, the discard punch 46 is inserted at least partially into the discard die 52. A cross-sectional view of the discard punch 46 within the discard die 52 is presented at FIG. 13, depicting a discard punch cross-section 124 and a discard die cross section 126. In some embodiments, the die clearance gap 122 is defined laterally between the discard punch 46 and the discard die 52 when the discard punch 46 is inserted into the discard die 52. In some embodiments, a minimum dimension 128 for the die clearance gap 122 is at least one and not more than three times the thickness t of said sheet material 34.

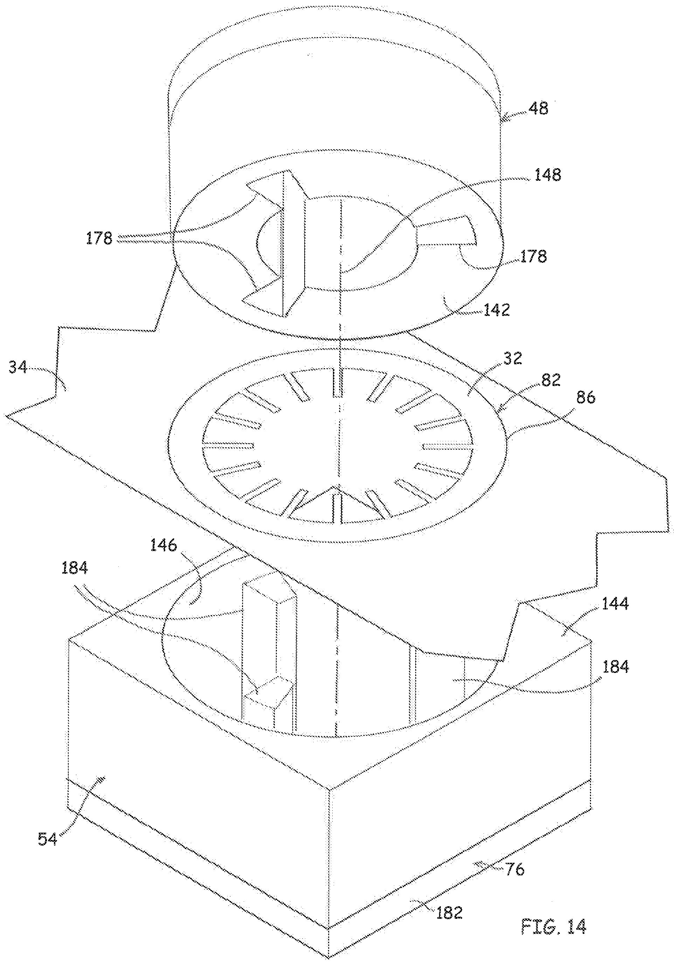

Referring to FIGS. 14 through 18, the component punch 48 and component die 54 are depicted according to an embodiment of the disclosure. The component punch 48 and component die 54 are so-named because they function to remove the component 32 from the sheet material 34. As such, the component punch 48 may occupy a footprint 142 that approximates but is within the outer score line 86. The component die 54, when utilized, is configured to receive the component punch 48 and may define a footprint 144 that is outside the outer score line 86. In the depicted embodiment, the outer score line 86, and therefore a receptacle 146 of the component die 54, are circular.

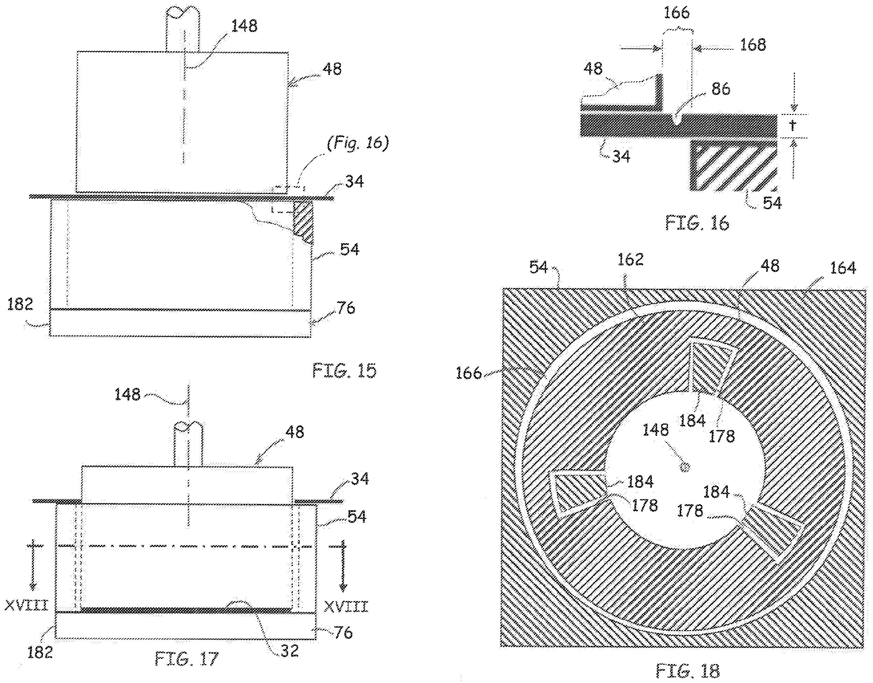

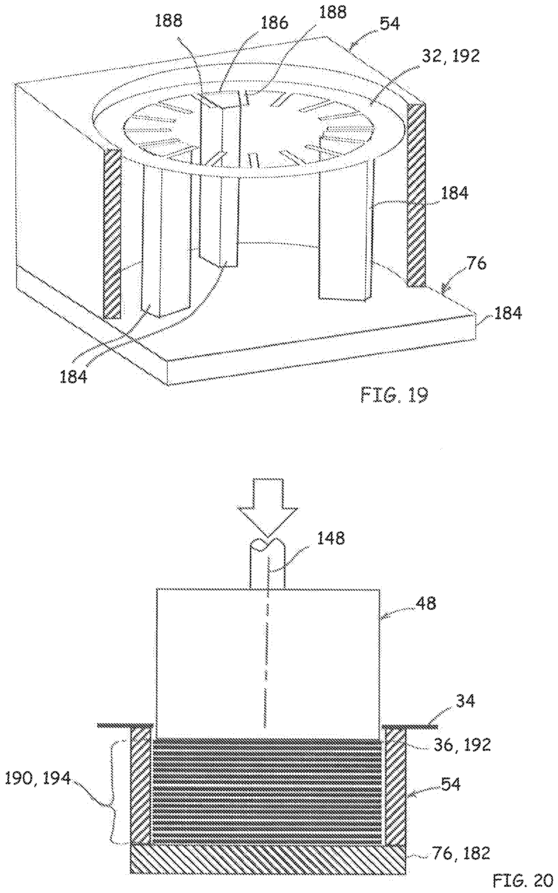

In operation, after the outline 82 of the component 32 has been scored with the scanning radiation source 42 and the discard 74 removed from the sheet material 34, the outer score line 86 is aligned over the component die 54, the component 32 being radially suspended by the outer score line 86 or the scored tabs. When in alignment, the component punch 48 and the component die 54 define a die clearance gap 166, over which the outer score line 86 is positioned (FIGS. 15 and 16). The component punch 48 is then thrust through the sheet material 34 along an actuation axis 148 to separate the component 32 from the sheet material 34 (FIG. 17) at the outer score line 86. During the separation of the component 32, the component punch 48 is inserted at least partially into the component die 54. In the depicted embodiment, the component punch 48 drives the component 32 into contact with the base 182 of the stacking fixture 76. A cross-sectional view of the component punch 48 within the component die 54 is presented at FIG. 18, depicting a component punch cross-section 162 and a component die cross section 164. In the depicted embodiment, the component punch 48 defines channels 178 that extend parallel to the actuation axis 148, as seen in the footprint 142 and cross-section 162 of the component punch 48. The channels 178 accommodate alignment columns 184 of the stacking fixture 76, discussed in greater detail below attendant to FIGS. 19 through 21. The die clearance gap 166 may be continuous and defined between the component punch 48 and the component die 54. In some embodiments, a minimum dimension for the die clearance gap 168 is at least one and not more than three times a thickness t of the sheet material 34.

Referring to FIGS. 19 through 21, the stacking fixture 76 is depicted according to an embodiment of the disclosure. In the depicted embodiment, the stacking fixture 76 includes a base 182 and one or more alignment columns 184 that extend upward from the base 182, parallel to the actuation axis 148. The component die 54 is supported by the base 182 of the stacking fixture 76, so that the alignment column(s) 184 extend upward from the base 182 and into the component die 54. The alignment column(s) 184 are positioned and shaped so that, as the component 32 is pushed into the component die 54, one or more voids or notches 185 defined by the component 32 passes axially over the column(s) 184.

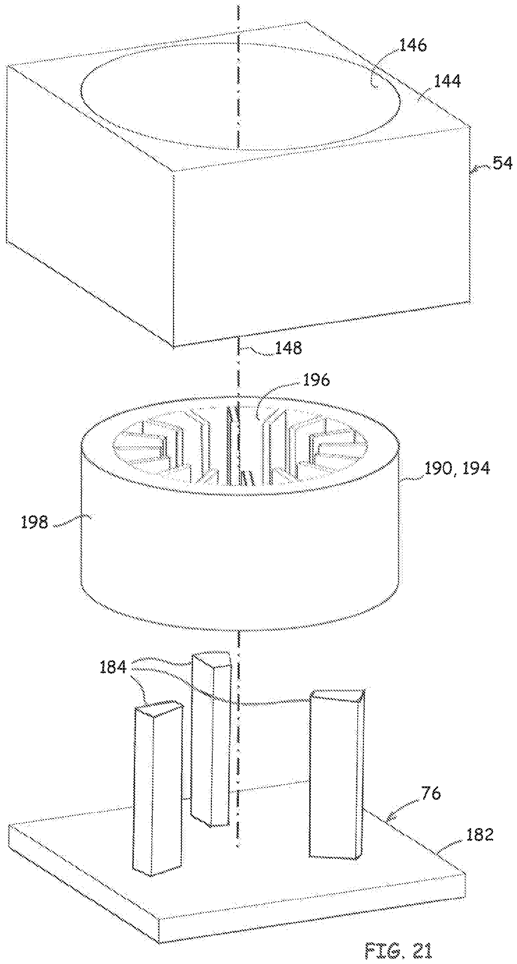

In some embodiments, the component punch 48 is configured to seat successively manufactured components 32 on the stacking fixture 76 and within the component die 54 to create a stack 190 of components 32 (FIG. 20). Each successive component 32 is compressed onto the stack 190. When the stack 190 is built up to a desired configuration, the stack 190 may be released by removing the component die 54 from the base 182 and extracting the stacking fixture 76 from the stack 190 (FIG. 21).

Functionally, the score outline 82 controls the line of separation in both the discard 74 and component 32 punching processes. This is in contrast to a conventional stamping process, where the line of separation is controlled by tight tolerances between tool and die. Accordingly, the tolerances between the discard punch 46 and the discard die 52 and between the component punch 48 and the component die 54 may be more generous. The more generous tolerances enable the components 32 to be driven deeply into the discard die 54 during formation of the stack 190. Also, because of the compressive rolling process that occurs after scoring but before the punching operations, the component 32 is in a finished state upon separation from the sheet material 34, and is ready for stacking. Use of the component die 54 in both fabrication of the components 32 and the formation of the stack 190 integrates the fabrication of the stack 190 with the manufacturing of the components 32, thereby negating the need for forming the stack 190 in an additional manufacturing process. The alignment column(s) 184 operate to maintain the rotational orientation of each successive component 32 as it is compressed onto the stack 190, and to maintain a right-cylindrical geometry of the stack 190 during build up.

In the depicted embodiment, the components 32 are electric motor laminations 192. There are three alignment columns 184, each being configured to fit within a respective slot 186 defined between adjacent stator teeth 188. The stack 190 forms a stator core 194 for an electric motor. The compression of successive laminations 192 forms a stator core 194 having substantially uniform characteristics throughout.

In some embodiments, the scoring-assisted system 30 is configured to generate a variety of shapes in sequence. For example, a given stator core 194 may call for adjacent motor laminations 192 to have slightly different shapes to build up a desired three-dimensional geometry. Each successive score outline 82 may be generated in appropriate sequence by the scoring-assisted system 30, so that successive motor laminations 192 provide the three-dimensional geometry when stacked in sequence.

Having generated the stator core 194, the motor laminations 192 may be bonded together to fix them in position and hold the stator core 194 together. The adhesive bonding may require heat treatment or backing of the stator. An inner surface 196 of the stator core 194 may also undergo post-stacking finishing to improve tolerances and surface quality. In some embodiments, an outer surface 198 of the stator core 194 undergoes a finishing process. The stator core 194 may be mounted on an expandable arbor (not depicted) for handling during an external finishing process. Example techniques for finishing the surfaces 196, 198 of the stator core 194 include turning, milling, grinding, honing, electrical erosion, or other finishing processes available to the artisan.

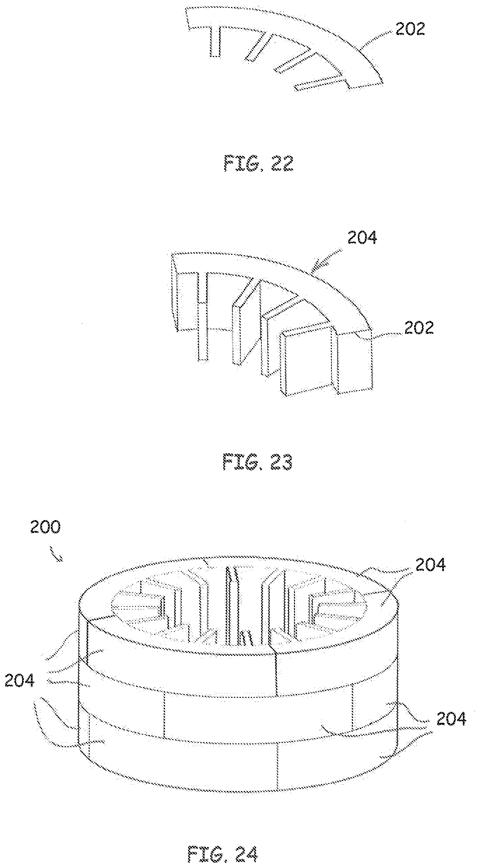

Referring to FIGS. 22 through 24, an alternative construction of a stator core 200 is depicted according to an embodiment of the disclosure. In the depicted embodiment, a lamination 202 constituting a fraction of a layer of the stator core 200 is fabricated and stacked in accordance with the technique previously described to produce a stator core segment 204. The lamination 202 can be produced by modifying the tooling in accordance with the principles disclosed herein. Such modifications are within the skill of an ordinary artisan in the relevant field. A plurality of stator core segments 204 may be surface finished and joined together to form the stator core 200 from the plurality of stator core segments 204 that are abutted tangentially and stacked axially. Joining may be performed, for example, by a welding or a gluing process. In the depicted embodiment, the lamination 202 is sized for 1/4 of a lamination layer after stacking and finishing. It is to be understood that any fraction may be utilized for the lamination 202, including 1/2, 1/3, 1/4, 1/5, 1/6, or smaller.

Referring to FIG. 25, a graph 210 of data characterizing a cutting depth parameter 212 of a groove versus scanning rate (cutting speed) 214 of a laser is presented according to an embodiment of the disclosure. The data were obtained in an experimental setup using an IPG Photonics YLR-1000-WC-Y14 Ytterbium single-mode CW laser at a power level 1000 Watts utilizing a fiber diameter of 14 µm. The laser was scanned with an IPG 2D High Power Scanner with a 200 mm collimator and a 254 mm focus lens. The focus spot diameter was calculated at 18 µm. The tests were performed at an ABB IRB2400 robot work station in a stationary scanner set up. The tests were performed on a vacuum honeycomb cutting table with an air knife purge directed on the process area. The tests were performed on mild steel sheet stock and silicon steel sheet stock of 100 µm nominal thickness. Mild steel data 216 and silicon steel data 218 are presented in the graph 210.

Data were taken for a single pass of the cutting laser at scanning rates of 7.0, 8.0, 10.0, 15.0, and 20.0 m/s. The graph 210 demonstrates that cutting depth is reduced as the scanning rate is increased, and that results were substantially similar for mild steel and silicon steel. It was also observed that less dross material was formed along the boundaries at higher scanning rates.

Referring to FIG. 26, a graph 220 of data characterizing a cutting depth parameter 222 of a groove versus the number of passes 224 of a laser is presented according to an embodiment of the disclosure. The data were obtained in an experimental setup using an IPG Photonics YLR-1000-WC-Y14 Ytterbium single-mode CW laser at a power level 1000 Watts utilizing a fiber diameter of 14 µm. The laser was scanned with an IPG 2D High Power Scanner with a 200 mm collimator and a 254 mm focus lens. The focus spot diameter was calculated at 18 µm. The tests were performed at an ABB IRB2400 robot work station in a stationary scanner set up. The tests were performed on a vacuum honeycomb cutting table with an air knife purge directed on the process area. The tests were performed on mild steel sheet stock and silicon steel sheet stock of 100 µm nominal thickness. Mild steel data 226 and silicon steel data 228 are presented in the graph 220.

Data were taken at a scanning rate of 20 m/s for the cutting laser at with the number of passes ranging from 1 to 5 inclusive. The graph 220 demonstrates that increasing the number of passes also increases the cutting depth, and that results were substantially similar for mild steel and silicon steel. It was also observed that complete cut through of the stock material was achieve at 5 passes at the 20 m/s scanning rate.

Each of the additional figures and methods disclosed herein can be used separately, or in conjunction with other features and methods, to provide improved devices and methods for making and using the same. Therefore, combinations of features and methods disclosed herein may not be necessary to practice the disclosure in its broadest sense and are instead disclosed merely to particularly describe representative and preferred embodiments.

## Claims

1. A scoring-assisted method for fabricating motor stator laminations from a sheet material (34), comprising:
scoring at least part of an outline (82) of a component (32) on the sheet material (34) with a high energy radiation source (42);
after the step of scoring, flattening said outline (82) with a flattening device (44);
after the step of flattening said outline (82), separating said component (32) from said sheet material (34).

2. The scoring-assisted method of claim 1, wherein the step of separating said component (32) includes:
aligning said outline (82) with a component die (54), said component die (54) being positioned and configured to receive a component punch (48); and
after the step of aligning, driving said component punch (48) through said sheet material (34) and into said component die (54) for disposing said component (32) onto a stacking fixture (76).

3. The scoring-assisted method of claim 2, comprising:
repeating the steps of scoring, flattening, separating, and driving to dispose a plurality of components (32) onto said stacking fixture (76), said plurality of components (32) forming a stack (78).

4. The scoring-assisted method of claim 3, comprising:
removing said component die (54) from said stacking fixture (76); and
removing said stack (78) from said stacking fixture (76).

5. The scoring-assisted method of claim 4, comprising:
bonding said components (32) of said stack (78) together; and
machining at least one of an inner surface and an outer surface of said stack (78).

6. The scoring-assisted method of claim 2, wherein, during the step of driving said component punch (48), a void defined by said component (32) passes axially over a column of said stacking fixture (76).

7. The scoring-assisted method of claim 6, wherein said component (32) is an electric motor lamination and said void is a slot defined between adjacent stator teeth of said electric motor lamination.

8. The scoring-assisted method of claim 6, comprising:
configuring said component punch (48) to be inserted within said component die (54) to define a minimum die gap clearance that is at least one and not more than three times a nominal thickness of said sheet material (34).

9. The scoring-assisted method of claim 1, comprising:
before the step of flattening said outline (82), a cutting operation cuts at least a portion of said outline (82) of said component (32) with said high energy radiation source (42).

10. The scoring-assisted method of claim 1, wherein the step of scoring includes scoring an inner periphery and an outer periphery of said component (32) part.

11. The scoring-assisted method of any one of claims 2 through 10, wherein said components (32) are electric motor laminations and said stack (78) is an electric motor core.

12. The scoring-assisted method of claim 1, comprising:
before the step of flattening, through-cutting a discard (74) out of said sheet material (34) with said high energy radiation source (42) to separate said discard (74) from said sheet material (34).

13. The scoring-assisted method of claim 1, comprising:
before the step of driving said component punch (48), driving a discard punch (46) through said sheet material (34) and into a discard die (52), said discard punch (46) being seated within a discard periphery of said outline (82).

14. The scoring-assisted method of claim 1, wherein the step of scoring defines a groove (96) having a depth that is in a range of not less than 20% and not more than 95% of a nominal thickness of said sheet material (34).

15. The scoring-assisted method of claim 1, wherein said high energy radiation source (42) in the step of scoring is a laser.

## Patentansprüche

1. Durch Kerbschnitt unterstütztes Verfahren zur Herstellung von Motorstatorblechen aus einem blattförmigen Material (34), wobei das Verfahren umfasst:
Kerbschnitt wenigstens eines Teils eines Umrisses (82) einer Komponente (32) auf dem blattförmigen Material (34) mit einer hochenergetischen Strahlungsquelle (42);
Glätten des Umrisses (82) mit einer Glättungsvorrichtung (44) nach dem Schritt des Kerbschnitts;
Trennen der Komponente (32) von dem blattförmigen Material (34) nach dem Schritt des Glättens des Umrisses (82).

2. Durch Kerbschnitt unterstütztes Verfahren nach Anspruch 1, wobei der Schritt des Trennens der Komponente (32) enthält:
Ausrichten des Umrisses (82) auf eine Komponentenmatrize (54), wobei die Komponentenmatrize (54) dafür positioniert und konfiguriert ist, eine Komponentenstanze (48) aufzunehmen; und
Antreiben der Komponentenstanze (48) durch das blattförmige Material (34) und in die Komponentenmatrize (54), um die Komponente (32) auf einer Stapelspannvorrichtung (76) anzuordnen, nach dem Schritt des Ausrichtens.

3. Durch Kerbschnitt unterstütztes Verfahren nach Anspruch 2, das umfasst:
Wiederholen der Schritte des Kerbschnitts, des Glättens, des Trennens und des Antreibens, um mehrere Komponenten (32) auf der Stapelspannvorrichtung (76) anzuordnen, wobei die mehreren Komponenten (32) einen Stapel (78) bilden.

4. Durch Kerbschnitt unterstütztes Verfahren nach Anspruch 3, das umfasst:
Entnehmen der Komponentenmatrize (54) aus der Stapelspannvorrichtung (76); und
Entnehmen des Stapels (78) aus der Stapelspannvorrichtung (76).

5. Durch Kerbschnitt unterstütztes Verfahren nach Anspruch 4, das umfasst:
Verbinden der Komponenten (32) des Stapels (78) miteinander; und
Bearbeiten einer Innenoberfläche und/oder einer Außenoberfläche des Stapels (78).

6. Durch Kerbschnitt unterstütztes Verfahren nach Anspruch 2, wobei während des Schritts des Antreibens der Komponentenstanze (48) ein durch die Komponente (32) definierter Hohlraum axial über eine Säule der Stapelspannvorrichtung (76) geht.

7. Durch Kerbschnitt unterstütztes Verfahren nach Anspruch 6, wobei die Komponente (32) ein Elektromotorblech ist und der Hohlraum eine zwischen benachbarten Statorzähnen des Elektromotorblechs definierte Nut ist.

8. Durch Kerbschnitt unterstütztes Verfahren nach Anspruch 6, das umfasst:
Konfigurieren der Komponentenstanze (48), die in die Komponentenmatrize (54) eingeführt werden soll, um eine minimale Matrizenspaltbreite zu definieren, die wenigstens das Einfache und nicht mehr als das Dreifache einer Nenndicke des blattförmigen Materials (34) ist.

9. Durch Kerbschnitt unterstütztes Verfahren nach Anspruch 1, das umfasst:
eine Schnittoperation, die wenigstens einen Abschnitt des Umrisses (82) der Komponente (32) mit der hochenergetischen Strahlungsquelle (42) schneidet, vor dem Schritt des Glättens des Umrisses (82).

10. Durch Kerbschnitt unterstütztes Verfahren nach Anspruch 1, wobei der Schritt des Kerbschnitts den Kerbschnitt eines Innenumfangs und eines Außenumfangs des Komponententeils (32) enthält.

11. Durch Kerbschnitt unterstütztes Verfahren nach einem der Ansprüche 2 bis 10, wobei die Komponenten (32) Elektromotorbleche sind und der Stapel (78) ein Elektromotorkern ist.

12. Durch Kerbschnitt unterstütztes Verfahren nach Anspruch 1, das umfasst:
Durchschneiden eines Abfalls (74) aus dem blattförmigen Material (34) mit der hochenergetischen Strahlungsquelle (42), um den Abfall (74) von dem blattförmigen Material (34) zu trennen, vor dem Schritt des Glättens.

13. Durch Kerbschnitt unterstütztes Verfahren nach Anspruch 1, das umfasst:
Antreiben einer Abfallstanze (46) durch das blattförmige Material (34) und in eine Abfallmatrize (52), wobei die Abfallstanze (46) in einen Abfallumfang des Umrisses (82) gesetzt wird, vor dem Schritt des Antreibens der Komponentenstanze (48).

14. Durch Kerbschnitt unterstütztes Verfahren nach Anspruch 1, wobei der Schritt des Kerbschnitts eine Rille (96) mit einer Tiefe definiert, die in einem Bereich von nicht weniger als 20 % und nicht mehr als 95 % einer Nenndicke des blattförmigen Materials (34) ist.

15. Durch Kerbschnitt unterstütztes Verfahren nach Anspruch 1, wobei die hochenergetische Strahlungsquelle (42) in dem Schritt des Kerbschnitts ein Laser ist.

## Revendications

1. Un procédé de fabrication de tôles de stator de moteur à partir d'un matériau en feuille (34), assisté par rainurage, comprenant :
le rainurage d'au moins une partie d'un contour (82) d'un composant (32) du matériau en feuille (34) avec
une source de rayonnement à haute énergie (42) ;
après l'étape de rainurage, aplatissement dudit contour (82) à l'aide d'un dispositif d'aplatissement (44) ;
après l'étape d'aplatissement dudit contour (82), de séparation dudit composant (32) du matériau en feuille (34).

2. Le procédé assisté par rainurage de la revendication 1, dans lequel l'étape de séparation dudit composant (32) comprend :
l'alignement dudit contour (82) avec une matrice de composant (54), ladite matrice de composant (54) étant positionnée et conçue pour recevoir un poinçon de composant (48) ; et
après l'étape d'alignement, le guidage dudit poinçon de composant (48) à travers ledit matériau en feuille (34) et à l'intérieur de la matrice de composant (54) pour disposer ledit composant (32) sur un dispositif d'empilage (76).

3. Le procédé assisté par rainurage de la revendication 2, comprenant :
la répétition des étapes de rainurage, d'aplatissement, de séparation et de guidage pour disposer d'une pluralité de composants (32) sur ledit dispositif d'empilage (76), ladite pluralité de composants (32) formant une pile (78).

4. Le procédé assisté par rainurage de la revendication 3, comprenant :
le retrait de ladite matrice de composant (54) dudit dispositif d'empilage (76) ; et le retrait de ladite pile (78) dudit dispositif d'empilage (76).

5. Le procédé assisté par rainurage de la revendication 4, comprenant :
la liaison desdits composants (32) de ladite pile (78) ; et
l'usinage d'au moins une surface intérieure et une surface extérieure de ladite pile (78).

6. Le procédé assisté par rainurage de la revendication 2, dans lequel un vide défini par ledit composant (32) passe axialement sur une colonne dudit dispositif d'empilage (76) pendant l'étape de guidage dudit poinçon de composant (48).

7. Le procédé assisté par rainurage de la revendication 6, dans lequel ledit composant (32) est une tôle de moteur électrique et ledit vide est une fente entre les dents adjacentes du stator de ladite tôle de moteur électrique.

8. Le procédé assisté par rainurage de la revendication 6, comprenant :
la configuration dudit poinçon de composant (48) à insérer à l'intérieur de ladite matrice de composant (54) pour définir un espacement libre minimum de la matrice qui est au moins une fois et pas plus de trois fois l'épaisseur nominale dudit matériau en feuille (34).

9. Le procédé assisté par rainurage de la revendication 1, comprenant :
avant l'étape d'aplatissement dudit contour (82), une opération de découpe découpe au moins une partie dudit contour (82) dudit composant (32) avec une source de rayonnement à haute énergie (42).

10. Le procédé assisté par rainurage de la revendication 1, dans lequel l'étape de rainurage comprend le rainurage d'une périphérie intérieure et d'une périphérie extérieure de la partie dudit composant (32).

11. Le procédé assisté par rainurage de l'une des revendications 2 à 10, dans lequel lesdits composants (32) sont des tôles du moteur électrique et ladite pile (78) est un noyau du moteur électrique.

12. Le procédé assisté par rainurage de la revendication 1, comprenant :
avant l'étape d'aplatissement, la découpe d'une chute (74) dans ledit matériau en feuille (34) avec une source de rayonnement à haute énergie (42) pour séparer ladite chute (74) dudit matériau en feuille (34).

13. Le procédé assisté par rainurage de la revendication 1, comprenant :
avant l'étape de guidage dudit poinçon de composant (48), le guidage d'un poinçon de chute (46) à travers le matériau en feuille (34) et à l'intérieur de la matrice de chute (52), ledit poinçon de chute (46) étant posé à l'intérieur d'une périphérie de chute dudit contour (82).

14. Le procédé assisté par rainurage de la revendication 1, dans lequel l'étape de rainurage définit une rainure (96) ayant une profondeur qui se situe dans une plage d'au moins 20 % et d'au plus 95 % d'une épaisseur nominale dudit matériau en feuille (34).

15. Le procédé assisté par rainurage de la revendication 1, dans lequel ladite source de rayonnement à haute énergie (42) dans l'étape de rainurage est un laser.
